# EUROPEAN PATENT SPECIFICATION

(11) **EP 3 561 201 B1**
(45) Date of publication and mention of the grant of the patent: **21.04.2021**
(21) Application number: 19171443.5
(22) Date of filing: 26.04.2019
(51) Int. Cl.: E04H 12/08, E02B 17/02, E04H 12/34, F03D 13/25, F16B 7/02

(54) **ASSEMBLY CONSTRUCTION; METHOD FOR MANUFACTURING A CONSTRUCTION**
MONTAGEKONSTRUKTION, VERFAHREN ZUR HERSTELLUNG EINER KONSTRUKTION
CONSTRUCTION D'ASSEMBLAGE, PROCÉDÉ DE FABRICATION D'UNE CONSTRUCTION

(30) Priority: 26.04.2018 NL 1042844
(43) Date of publication of application: 30.10.2019
(73) Proprietor: KCI the engineers B.V., 3125 AE Schiedam (NL)
(72) Inventor: VAN GELDER, Klaas Boudewijn, 3125 AE Schiedam (NL)
(74) Representative: V.O.

(56) References cited:
- EP-A2- 3 255 210
- US-A- 4 245 928

## Description

The invention concerns a structural assembly, comprising a substructure, such as a lower pile having an upper end and a superstructure having a lower end, said upper end and said lower end fit inside each other and are being engaged to each other at ring contact surfaces. More in general, the invention relates to an in-line connection between a lower element and an upper element of which the lower element is provided with an upper end and the upper element is provided with a lower end, wherein the upper end and the lower end are engaged to each other via two axially spaced apart rings. The upper element and the lower element can be tubular sections of a super structure or a pile respectively. The lower element can be a pile anchored to the sea bed, floating or not, or can be a floating structure having an upper tubular section to connect with a superstructure.

Document US 4245928 discloses a grout connection and method for connecting brace members of piles of a marine structure. An inner pipe member is provided with threaded portions on its outer surface, and a wedge is placed over the threads. The outer pipe member is placed over the inner pipe and the wedge forming a gap to be filled with filler material. The gap is at an upper side covered with a flange plate mounted on the outer pipe. The flange plate is provided with a rubber plate for preventing leakage.

Tubular sections of wind turbine foundations and towers according to the prior art can be connected by a so called Double Slip Joint, as described in the European patent EP2910686A2. The contact surfaces of both the top rings and bottom rings of the Double Slip Joint are conical. The reason for this is that both rings can transfer about equal bending loads and axial loads, after the Double Slip Joint settles by sliding down to a certain depth under the influence of the weight of the wind turbine and wind loads.

A disadvantage however is that the equal load sharing between the top and bottom rings will depend on the accuracy of the rings distances, which complicates the manufacturing process.
The construction material of the double slip joint can be steel, which means that the material strain is limited typically within the elastic limit of about 0.2% and accordingly the structural deformations are small. As a consequence all fitting tolerances of the inner rings and the outer rings of the double slip joint are also small, since the elastic deformations are limited. Fabrication costs will increase for small tolerances and this can be a governing factor in the economic attractiveness of the double slip joint.

The objective of the invention is to remove one or more of the above disadvantages and to provide a better solution.

Thereto, the invention provides for an assembly construction for an in-line connection according to claim 1. Also, a method for manufacturing of such an in-line connection is provided according to claim 7.

This is accomplished by three provisions:
1) The inner part and outer part of the DSJ are manufactured as conical or cylindrical tubes, e.g. by rolling. The first provision is that, unlike the DSJ, the contact surface at the top or the contact surface at the bottom can be made cylindrical, as opposed to conical. In this way free axial movement is enabled and the tolerance for the distance between top and bottom contact plates is no longer related to the load sharing of the top and bottom rings. The contact pressure of the cylindrical contact plate will not increase during settling of the connection. The cylindrical contact plate does only transfer relatively small loads. The primary function of this contact plate is to ensure the alignment of the connection rather than transferring loads. On the other hand the weight of the superstructure is fully supported by the conical contact plate and the contact pressure of the conical contact plate will increase during settling, which enable the transfer of bending loads by friction. In the end most of the loads will be transferred by the conical contact plate. The primary function of the conical contact plates is transferring loads.
2) The second provision is to create contact surfaces by separate ring elements made of relatively thin plate, further referred to as "contact plates". Manufacturing of contact plates is simpler, since they are produced as separate parts, which dimensions and weight are relatively small. The contact plates are connected at the inner and outer tubes e.g. by gluing or by welding the edges of the contact plates. This allows for adjusting the distance between the contact plates at the top and at the bottom, whereby the tolerance for rings distance can be small and relatively easy to achieve.
3) The third provision is that the contact plate at the top or the contact plate at the bottom is made of an elastic material, such as rubber, further referred to as "soft contact plate". This material allows for relatively large deformations, which means that fitting tolerances of the inner rings and outer rings of the double slip joint can be larger, simplifying the manufacturing of the connection. The soft material also seals off the contact surface from the environment, protecting it from corrosion.

By providing an assembly construction according to claim 1, an in-line connection between a lower element and an upper element of which the lower element is provided with an upper end and the upper element is provided with a lower end, wherein the upper end and the lower end are engaged to each other via two axially spaced apart rings is obtained, wherein one of the rings is cylindrically shaped and one of the rings is conically shaped. By providing one cylindrically shaped ring contact surface and one conically shaped ring contact surface, the accuracy of the positioning of the rings along the upper end and/or the lower end can be less strict as when using two conically shaped ring contact surfaces. So, manufacturing of the rings, or of at least one of the rings can be less critical with respect to tolerances. The cylindrically shaped ring is configured to have a contact surface that engages and makes contact with the other element, while allowing axial movement. Then, most of the loads are carried by the conically shaped ring contact surfaces engaging to a corresponding conically shaped ring contact surface.

Advantageously, the upper end of the lower element, is the upper end of a pile of an offshore structure, such as a foundation pile of a wind turbine. The lower end of the upper element, is advantageously, a lower end of a superstructure, such as a wind turbine tower or a transition piece. The lower end and the upper end are preferably conical or tubular sections of a pile. The upper end may engage inside of the inner end to form an outer tube and an inner tube respectively. Or the lower end may engage inside of the upper end to form an outer tube and an inner tube respectively. The upper end and the lower end may be provided with a cylindrically shaped ring and with a conically shaped ring that provide for contact surfaces that engage with the contact surfaces of the corresponding ring of the other one of the upper end and the lower end. Alternatively, only one of the ends, for example the end forming the outer tube is provided with two axially spaced apart rings at an inner side of the outer tube of which one ring is cylindrically shaped and the other ring is conically shaped. Alternatively, the end forming the inner tube can be provided with two axially spaced apart rings, one having a cylindrically shaped contact surface and one having a conically shaped contact surface. The rings of the inner tube and/or outer tube are advantageously machined to form a contact surface that engages with a contact surface, preferably machined as well, on the other part, inner tube or outer tube, with which they slidingly contact, in particular when the contact surfaces are conically shaped, as to provide for a firm connection under the weight of the superstructure. When having conically shaped contact surfaces, the thus provided in-line connection may act as a wedge connection that settles more and becomes more firm over time by the weight of the superstructure. Thus, a firm and reliable connection can be obtained without the use of any instruments or tools.

Or, it may be that the ring with the cylindrically shaped contact surface may be provided on the end forming the inner tube, while both the inner tube and the outer tube may be provided with engagingly contacting conically shaped ring contact surfaces or one of the inner tube and the outer tube may be provided. So, many configurations of rings on the upper end and/or the lower end are possible. Rings on one end may engage with rings on the other end such that their respective contact surfaces provide for surface contact or may engage with contact surfaces, machined or not, directly on the other end.

By providing one cylindrically shaped ring contact surface and one conically shaped ring contact surface to provide for the in-line connection, the conically shaped ring contact surface and its associated ring may provide for most of the load transfer, typically via frictional contact. Contrary to the conventional single slip joint, there is now provided for an additional ring having a cylindrically shaped ring contact surface. For example, in case of failure of the connection provided by the conically shaped rings, the ring with the cylindrically shaped contact surface may prevent the failure of the complete in-line connection by absorbing the loads and providing for a form-closed connection preventing entire failure. Thus, the ring with the cylindrically shaped contact surface may also provide for a more safe and reliable in-line connection.

In an example, the cylindrically shaped ring contact surface is positioned below the conically shaped ring contact surface, albeit on the same upper end or lower end or on either the upper end or the lower end. By positioning the cylindrically shaped ring contact surface below the conically shaped ring contact surface, the main load bearing connection is above and the cylindrically shaped ring contact surfaces may not clampingly engage and thus may not or limitedly transfer bending moment. Thus, the ring having the cylindrically shaped contact surface can become smaller which may be beneficial for manufacturing and installation. This may also give a weight reduction. The cylindrically shaped connection may then optimally provide for sliding contact for a stable in-line connection, for example in case of a floating substructure. Alternatively, the ring with the cylindrically shaped contact surface can be positioned above the ring with the conically shaped contact surface. Both configurations can be possible.

The upper end and/or the lower end, forming the inner tube and/or the outer tube, may be provided as a conically shaped tube, preferably having the same conical shape or same or similar taper angle. The rings may be provided as separated rings welded in between sections of the inner tube and/or of the outer tube as to form a part of the wall of the inner tube and/or of the outer tube. The inner tube and/or the outer tube then have to be cut circumferentially to form two sections to allow the ring to be mounted inbetween the two sections and to be connected again to form an integrated inner tube and/or outer tube. The manufacturing, in particular positioning the rings on the axially predefined position, may thus be relatively critical and may lead to relatively high costs. Alternatively, the rings, in particular their associated contact surfaces, can be integrally machined on the lower end or on the upper end, such that an integral piece is provided as lower end and/or upper end including the rings. Alternatively, the rings can be provided from plate material, e.g. from rolled plate material, and the plate material ring can be connected to the outer side of the inner tube and/or to the inner side of the outer tube. An outer side of the plate material may then be machined to form a contact surface, while an inner side of the plate material may be connected to the inner tube or outer tube. The plate material rings can then relatively simply be connected to the inner tube and/or the outer tube, e.g. by welding or chemical bonding or adhesives etc. Advantageous is that the inner tube and/or the outer tube can remain in one piece and do not have to be cut through first to connect the rings. This may be beneficial for manufacturing, as well as for material properties of the inner tube and/or the outer tube for their strength and/or stiffness. The plate material may be steel plate material, which can be relatively easily be welded to the inner tube and/or the outer tube, being from steel, or other wise connected to the inner tube and/or the outer tube when they may be from another material, e.g. concrete. As such, a conventional slip joint can be modified and adapted to the double slip joint according to the invention.

Alternatively, the upper end and/or the lower end forming an inner tube and/or an outer tube, one or both the inner tube and/or the outer tube can be cylindrically shaped tubes of which the outer tube fits over the inner tube. As explained above, the rings can be connected in between sections of the inner tube and/or the outer tube or can be provided as plate material rings connected to an outer side and/or an inner side of the inner tube and/or the outer tube respectively.

Advantageously, the rings are provided with a contact surface that is arranged for steel-to-steel contact. Direct contact, without the use of any coatings or protective layers, is preferred to allow for improved load distribution and a firm connection. Preferably, the contact surfaces are machined as to provide for a smooth contact surface that can engage with the machined contact surface on the other element over as much as possible over the surface to provide for a smooth surface contact. By providing machined contact surfaces, the load distribution can be improved and/or optimized.

For example can one of the rings, preferably the cylindrically shaped ring, be made of a resilient material. The resilient material is elastically deformable, such as rubber, and is not used in its plastically deformable zone, if any. The resilient material is advantageously positioned axially above the other ring, and as such may provide for a sealing or covering of the lower ring connection. Alternatively and/or additionally, part of the cylindrically shaped ring may be provided from a resilient material, e.g. a lower edge of the ring may be provided with a ring of resilient material. The other ring can then be made from steel.

The conically shaped ring, having a conically shaped contact surface, is advantageously tapered such that the outer tube fits over the inner tube and can settle and firmly engage to the inner tube under the weight of the superstructure. For example, when the inner tube is the upper end of the lower element and the outer tube is the lower end of the upper element, the contact surface on the inner tube tapers upwardly and inwardly, and the contact surface on the outer tube tapers upwardly and inwardly as well, having the same inclination angle as to provide for a smooth contact between the inner tube and the outer tube. Vice versa when the inner tube is the upper end and the outer tube is the lower end, then the contact surfaces can be tapered upwardly and outwardly.

In another aspect there is provided for a method for manufacturing a lower end and/or an upper end of a superstructure and/or a pile respectively for use in a in-line connection between the lower end and the upper end, wherein the lower end and/or the upper end is conically shaped, the method comprising: manufacturing at least one ring from plate material; fixating the ring to the lower end and/or the upper end to form an in-line connection. As such, even a conventional slip joint configuration can be used to add the rings to and to form a reliable in-line connection.

Advantageously, the at least one ring comprises a machined contact surface for contacting a contact surface on the engaged lower or upper end. In an example, the two rings are provided on the lower end and/or the upper end at an axial distance from each other both at the same ends or on both ends or on either one of the ends. Preferably, one of the rings is cylindrically shaped and the other one of the rings is conically shaped to form a firm and reliable in-line connection, also in case of possible failure of the conically shaped ring connection.

The plate material of one rings can be a steel plate material, and wherein the plate material of the other one of the rings can be of elastically deformable material.

In another aspect, there is provided a method for installing a wind turbine comprising: installing a substructure, such as a pile, anchoring in the seabed, wherein the substructure is provided with an upper end, providing a superstructure, such as a wind turbine or a transition piece, wherein the superstructure is provided with a lower end; engaging the upper end of the superstructure with the lower end of the substructure as to form an inner tube and an outer tube fitting into each other, wherein the inner tube and/or the outer tube are provided with two rings positioned at an axial distance from each other wherein the rings provide contact surfaces for contacting the other one of the inner tube and/or the outer tube respectively, wherein one of the rings is cylindrically shaped and one of the rings is conically shaped.

There is provided an assembly construction comprising a pile at a lower side, wherein the pile comprises an upper end, and a superstructure with a lower end, that fit into each other and are engaged to each other by means of ring-shaped contact surfaces, characterised in that at an upper side and at a lower side of the connection ring-shaped contact surfaces are obtained by mounting plate material on an inner side of the outer tube or by mounting plate material on the outer side of the inner tube, or by mounting plate material on both the inner side of the outer tube and on the outer side of the inner tube.

In a further aspect of the assembly construction, the upper end of the pile fits in the lower end of the superstructure and the contact surface between the inner tube and the outer tube at the upper side tapers upwardly and the contact surface at the lower side is cylindrical, or the contact surface between the inner tube and the outer tube at the lower side tapers upwardly and the contact surface at the upper side is cylindrical, or both contact surfaces of the inner tube taper upwardly.

In another aspect of the assembly construction the lower end of the superstructure fits in the upper end of the pile, and the contact surface between the inner tube and the outer tube at the upper side tapers downwardly and the contact surface at the lower side is cylindrical, or the contact surface between the inner tube and the outer tube at the lower side tapers downwardly and the contact surface at the upper side is cylindrical, or both contact surface of the inner tube taper downwardly. In another aspect, the plate material of at least one ring-shaped contact surface is made from elastic material.

Further explanation of the invention will be given by means of figures below, which will give a practical embodiment of the invention, but may not be considered in a limiting sense, wherein:
Figure 1 shows a side view of a general arrangement and the main parts of an offshore wind turbine.
Figure 2 shows a cross section of a DSJ according to prior art.
Figures 3a and 3b show cross sections of the top view and side view of an aspect of the double slip joint according to prior art.
Figure 4 shows a cross section of an inverted embodiment of the double slip joint of figure 3.
Figure 5a and 5b show a cross section of the top view and side view of an embodiment according to another aspect of the double slip joint not claimed.
Figure 6 shows a cross section of another embodiment of another aspect of the double slip joint according to the invention.
Figure 7a and 7b show isometric views of the inner parts of the DSJ shown in figure 6, where figure 7b shows an alternative embodiment with cross plates.
Figure 8 shows a cross section of another embodiment according to another aspect of a double slip joint according to the invention.

The figures are given by way of a schematic representation of embodiments of the prior art and the invention and are not to scale nor limiting to the invention claimed. Like parts are denoted with like reference numbers.

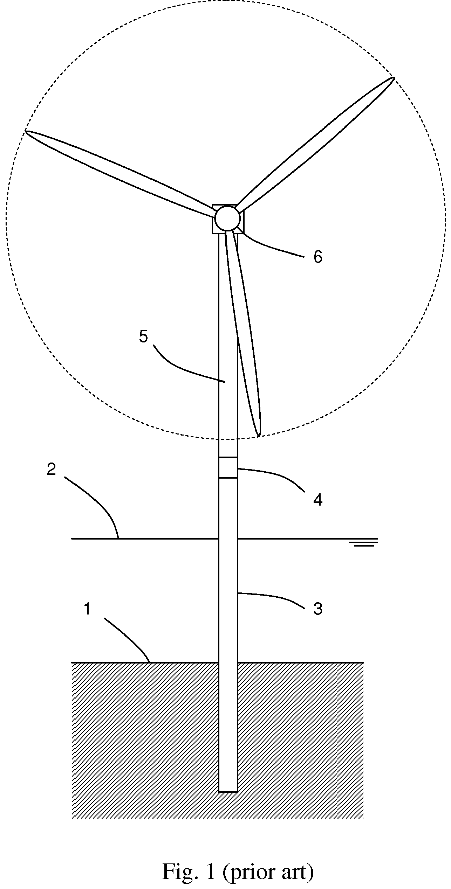

The offshore turbine presented in figure 1 shows a general arrangement of an offshore turbine installed in the sea bottom (1), the sea water level (2), the foundation pile (3) which is installed in the sea bottom (1), the connection (4) between the foundation pile (3) and the wind turbine tower (5) and the turbine nacelle and rotor (6).

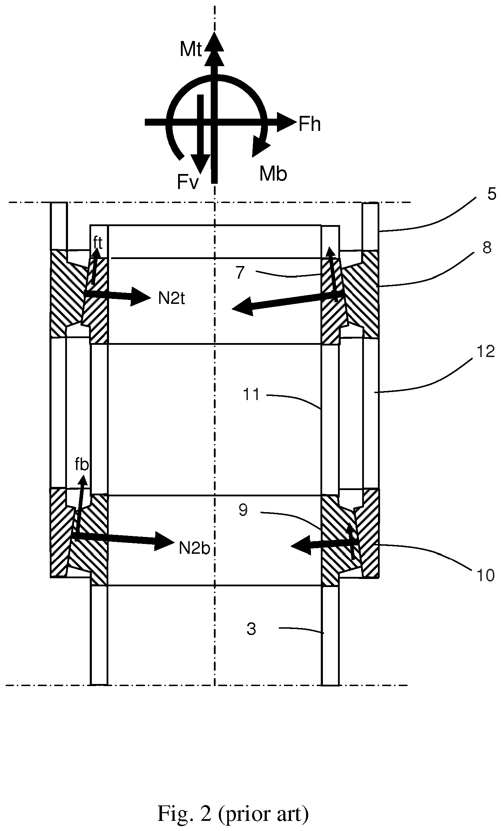

In figure 2 the foundation pile (3) and the tower (5) are connected by tapered conical rings (7,8,9,10) which are axially loaded by a vertical force (Fv) of the weight of the superstructure, comprising the tower (5), nacelle and rotor (6). The turbine loads are shown comprising the components of the vertical force (Fv), the horizontal force (Fh), the bending moment (Mb) and the torsion moment (Mt). The other structural parts (11, 12) of the connection are made from cylindrically rolled plate. The contact pressure normal to the surface at the top (N2t) and the bottom (N2b) and friction shear stress at the top (ft) and at the bottom (fb) are in equilibrium with the turbine loads.

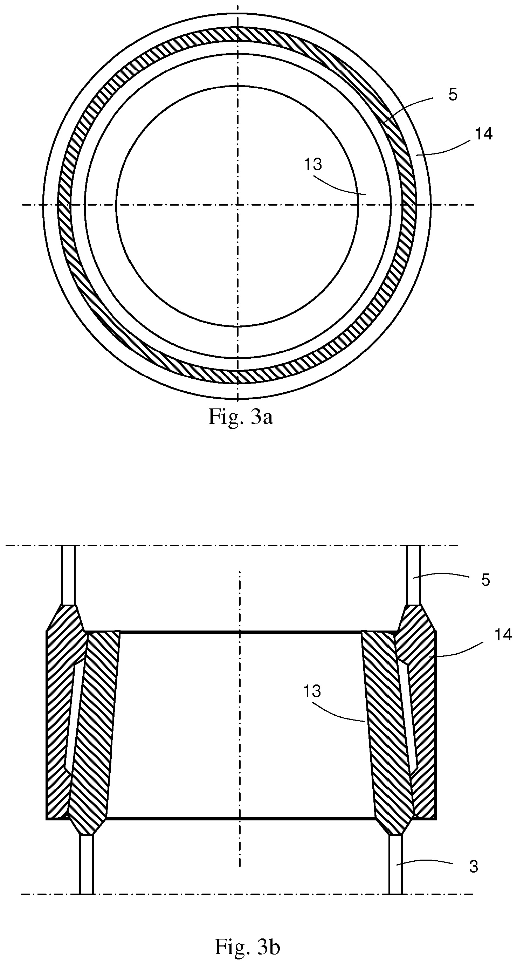

In figure 3b the side view cross-section of the top ring, the bottom ring and the conical tube in between the rings of a double slip joint are shown as integrated components for the inner tube (13) and outer tube (14). In this embodiment the inner tube (13) is the upper-end of the pile (3) and the outer tube (14) is the lower-end of the superstructure (5). The ring contact surfaces between the inner tube (13) and outer tube (14) both are tapered upward such that the double slip joint will settle under the weight of the superstructure and wind loads. If the dimensions allow, both parts can be produced in one piece, e.g. rolled and machined plate. In figure 3a the top view of the same double slip joint is shown, whereby the cross section is made at the turbine tower (5) and the inner tube (13) and outer tube (14) are indicated. An efficient in-line connection is thus obtained.

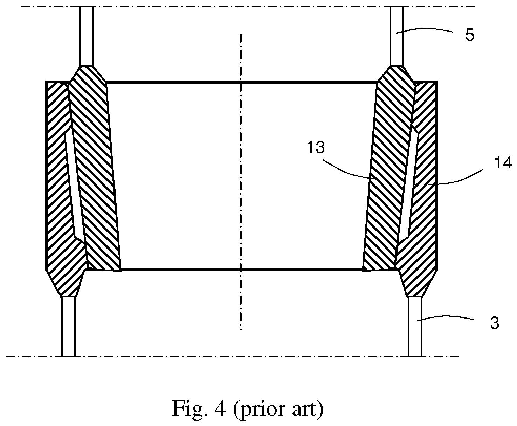

In figure 4 an inverted embodiment of the double slip joint is shown, whereby the inner tube (13) is the lower-end of the wind turbine tower (5) and the outer tube (14) is the upper-end of the foundation pile. (3). The ring contact surfaces between the inner tube (13) and outer tube (14) both are tapered downward such that the double slip joint will settle under the weight of the superstructure and wind loads.

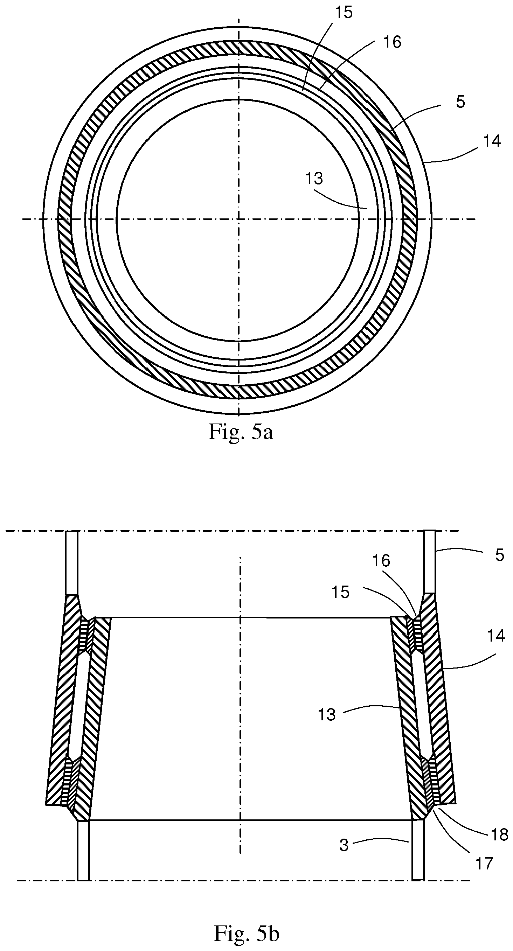

In figures 5a and 5b contact plates (15,16,17,18) are mounted at the inside of the outer tube (14) and at the outside of the inner tube (13) according to an aspect not claimed. The contact plates (15,16,17,18) are machined to provide contact surfaces and to meet tolerances of roughness and dimensions. The contact plates (15,16,17,18) may comprise complete rings, as shown in figure 5a, or several segments forming the rings around the circumference. The axial position of the contact plates can be moved to adjust the distance and parallel orientation of the rings. One or more contact plates can be made of elastic material, e.g. rubber, according to an aspect of the invention. Preferably, one ring or contact plate can be made from a resilient material and the other ring or contact plate can be made from steel.

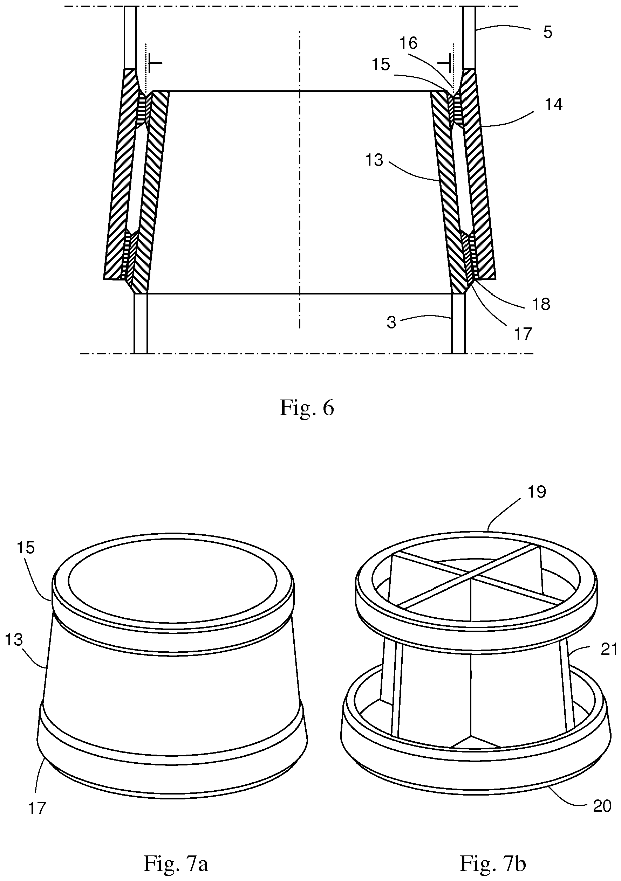

In figure 6 the contact surface of the contact plates (15,16) at the top are cylindrical according to another aspect of the invention. The contact pressure between the contact plates (15, 16) therefore does not depend on the settling depth or on the distance between the contact plates (15) and (17) or on the distance between the contact plates (16) and (18). Alternatively the contact plates at the bottom could be made cylindrical, while the contact plates at the top are made conical.

In figure 7a an isometric view of the internal parts of the double slip joint of figure 6 is shown. The upper ring and lower ring are connected by a conical tube (13). An alternative embodiment is shown in figure 7b, where the upper ring (19) and lower ring (20) are connected by vertical flat plates (21) crossing in the center line of the double slip joint. Another embodiment could also include more flat plates in an arrangement connecting the upper and lower rings.

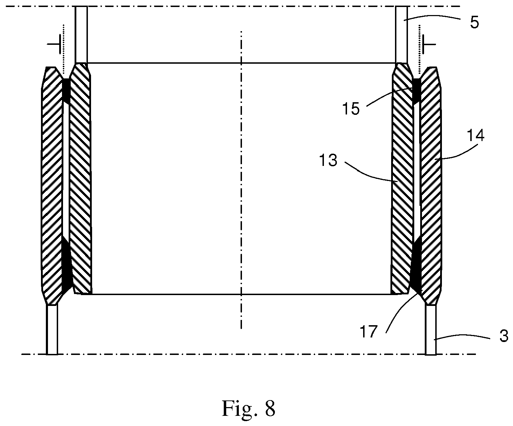

In figure 8 the tubes (13, 14) between the contact rings are approximately cylindrical. Cylindrical tubes can be produced faster and cheaper, also reducing spillage of the material cuttings. In this embodiment one conical shaped steel contact plate (17) is attached to the outer tube, while one cylindrical shaped contact plate (15) at the top is attached to the inner tube. The cylindrical contact plate can be a soft or resilient contact plate, e.g. made of steel or alternatively of rubber. In the latter case the rubber is especially suitable to seal off the contact surfaces, protecting them from corrosion.

Similar to figure 4, the double slip joints shown in figure 5, 6 and 7 can also be inverted, whereby the inner tube (13) is the lower-end of the wind turbine tower (5) and the outer tube (14) is the upper-end of the foundation pile.

Other modifications and alternatives are also possible. The drawings given are to be regarded in an illustrative sense rather than in a restrictive sense. The scope of the invention may include embodiments having combinations of all or some of the features described. The invention is explained by means of an example where the superstructure is an offshore wind turbine. Other types of the superstructure may occur as well, e.g. an oil- or gas process facility, an accommodation unit, an electrical transformer platform or a power plant.

For the purpose of clarity and a concise description, features are described herein as part of the same or separate embodiments, however, it will be appreciated that the scope of the invention may include embodiments having combinations of all or some of the features described. It may be understood that the embodiments shown have the same or similar components, apart from where they are described as being different. The mere fact that certain measures are recited in mutually different claims does not indicate that a combination of these measures cannot be used to an advantage. Many variants will be apparent to the person skilled in the art. All variants are understood to be comprised within the scope of the invention defined in the following claims.

## Claims

1. An assembly construction for an in-line connection comprising a pile and a superstructure for mounting on the pile, wherein the pile comprises an upper end and the superstructure comprises a lower end, wherein the lower end of the superstructure is configured for engaging with the upper end of the pile as to form an inner tube (13) and an outer tube (14) fitting into each other, wherein the inner tube and the outer tube are provided with two rings positioned at an axial distance from each other wherein the rings provide contact surfaces (15, 16, 17, 18) for contacting the other one of the inner tube or the outer tube respectively, wherein the contact surface of one of the rings is cylindrically shaped and the contact surface of one of the rings is conically shaped, wherein the cylindrically shaped contact surface provides for alignment of the connection.

2. The assembly construction of claim 1, wherein the cylindrically shaped contact surface ring (15, 16) is positioned below the conically shaped contact surface ring (17, 18).

3. The assembly construction of claim 1 or 2, wherein the inner tube (13) and/or the outer tube (14) is conically shaped.

4. The assembly construction of any of the preceding claims, wherein the contact surfaces (15, 16, 17, 18) of at least one of the rings are configured to provide steel-on-steel contact.

5. The assembly construction according to any one of the preceding claims, wherein one of the rings (15, 16, 17, 18) is provided from a resilient elastically deformable material.

6. The assembly construction according to any one of the preceding claims, wherein the rings are provided as a ring-shaped plate connected to the inner tube (13) and/or the outer tube (14).

7. Method for manufacturing a lower end and/or an upper end of a superstructure and/or a pile respectively for use in an in-line connection between the lower end and the upper end, the method comprising:
manufacturing at least one ring from plate material; fixating the ring to the lower end and/or the upper end, wherein two rings (15, 16, 17, 18) are provided on the lower end and/or the upper end at an axial distance from each other,
wherein a contact surface of one of the rings is cylindrically shaped and a contact surface of the other one of the rings is conically shaped.

8. Method according to claim 7, wherein the at least one ring comprises a machined contact surface for contacting a contact surface on the engaged lower end or upper end.

9. Method according to any of the claims 7 - 8, wherein the plate material of one ring is a steel plate material, and wherein the plate material of the other one of the rings is of elastically deformable material.

10. Method for installing a wind turbine comprising:
- installing a substructure, such as a pile, anchoring in the seabed, wherein the substructure is provided with an upper end,
- providing a superstructure, such as a wind turbine or a transition piece, wherein the superstructure is provided with a lower end;
- engaging the upper end of the superstructure with the lower end of the substructure as to form an inner tube (13) and an outer tube (14) fitting into each other, wherein the inner tube (13) and/or the outer tube (14) are provided with two rings positioned at an axial distance from each other wherein the rings provide contact surfaces (15, 16, 17, 18) for contacting the other one of the inner tube (13) and the outer tube (14) respectively, wherein the contact surface of one of the rings is cylindrically shaped and the contact surface of one of the rings is conically shaped, wherein the cylindrically shaped contact surface engages and makes contact with the other tube, while allowing axial movement.

## Patentansprüche

1. Montagekonstruktion für eine Inline-Verbindung, die einen Pfahl und einen Aufbau zur Montage auf dem Pfahl umfasst, wobei der Pfahl ein oberes Ende und der Aufbau ein unteres Ende umfasst, wobei das untere Ende des Aufbaus so ausgelegt ist, dass es in das obere Ende des Pfahls eingreift, um ein inneres Rohr (13) und ein äußeres Rohr (14) zu bilden, die ineinander passen, wobei das innere Rohr und das äußere Rohr mit zwei Ringen versehen sind, die in einem axialen Abstand voneinander positioniert sind, wobei die Ringe Kontaktflächen (15, 16, 17, 18) zum Kontaktieren des jeweils anderen des inneren Rohrs oder des äußeren Rohrs bereitstellen, wobei die Kontaktfläche von einem der Ringe zylindrisch geformt ist und die Kontaktfläche von einem der Ringe konisch geformt ist, wobei die zylindrisch geformte Kontaktfläche die Ausrichtung der Verbindung vorsieht.

2. Montagekonstruktion nach Anspruch 1, wobei der zylindrisch geformte Kontaktflächenring (15, 16) unterhalb des konisch geformten Kontaktflächenrings (17, 18) positioniert ist.

3. Montagekonstruktion nach Anspruch 1 oder 2, wobei das innere Rohr (13) und/oder das äußere Rohr (14) konisch geformt ist.

4. Montagekonstruktion nach einem der vorhergehenden Ansprüche, wobei die Kontaktflächen (15, 16, 17, 18) von wenigstens einem der Ringe so ausgelegt sind, dass sie Stahl-auf-Stahl-Kontakt bereitstellen.

5. Montagekonstruktion nach einem der vorhergehenden Ansprüche, wobei einer der Ringe (15, 16, 17, 18) aus einem robusten elastisch verformbaren Material vorgesehen ist.

6. Montagekonstruktion nach einem der vorhergehenden Ansprüche, wobei die Ringe als ringförmige Platte vorgesehen sind, die mit dem inneren Rohr (13) und/oder dem äußeren Rohr (14) verbunden ist.

7. Verfahren zur Herstellung eines unteren Endes und/oder eines oberen Endes eines Aufbaus und/oder eines Pfahls jeweils zur Verwendung in einer Inline-Verbindung zwischen dem unteren Ende und dem oberen Ende, wobei das Verfahren umfasst: Herstellen wenigstens eines Rings aus Plattenmaterial; Befestigen des Rings an dem unteren Ende und/oder dem oberen Ende, wobei zwei Ringe (15, 16, 17, 18) an dem unteren Ende und/oder dem oberen Ende in einem axialen Abstand voneinander vorgesehen sind, wobei eine Kontaktfläche eines der Ringe zylindrisch geformt ist und eine Kontaktfläche des anderen der Ringe konisch geformt ist.

8. Verfahren nach Anspruch 7, wobei der wenigstens eine Ring eine bearbeitete Kontaktfläche zur Kontaktierung einer Kontaktfläche am eingreifenden unteren Ende oder oberen Ende umfasst.

9. Verfahren nach einem der Ansprüche 7 bis 8, wobei das Plattenmaterial des einen Rings ein Stahlplattenmaterial ist, und wobei das Plattenmaterial des anderen der Ringe aus elastisch verformbarem Material besteht.

10. Verfahren zur Installation einer Windturbine, umfassend:
- Installation eines Unterbaus, wie eines Pfahls, der im Meeresboden verankert ist, wobei der Unterbau mit einem oberen Ende versehen ist,
- Bereitstellen eines Aufbaus, wie einer Windturbine oder eines Übergangsstücks, wobei der Aufbau mit einem unteren Ende versehen ist;
- Ineinandergreifen des oberen Endes des Aufbaus mit dem unteren Ende des Unterbaus, um ein inneres Rohr (13) und ein äußeres Rohr (14) zu bilden, die ineinander passen, wobei das innere Rohr (13) und/oder das äußere Rohr (14) mit zwei Ringen versehen sind, die in einem axialen Abstand voneinander positioniert sind, wobei die Ringe Kontaktflächen (15, 16, 17, 18) zum Kontaktieren des jeweils anderen des inneren Rohrs (13) und des äußeren Rohrs (14) bereitstellen, wobei die Kontaktfläche eines der Ringe zylindrisch geformt ist und die Kontaktfläche eines der Ringe konisch geformt ist, wobei die zylindrisch geformte Kontaktfläche in das andere Rohr eingreift und einen Kontakt damit herstellt, während sie eine axiale Bewegung ermöglicht.

## Revendications

1. Construction d'assemblage pour une liaison en alignement comprenant un pieu et une superstructure à monter sur le pieu, où le pieu comprend une extrémité supérieure et la superstructure comprend une extrémité inférieure, où l'extrémité inférieure de la superstructure est configurée pour s'engager avec l'extrémité supérieure du pieu de manière à former un tube interne (13) et un tube externe (14) s'emboîtant l'un dans l'autre, où le tube interne et le tube externe sont pourvus de deux anneaux positionnés à une distance axiale l'un de l'autre, où les anneaux fournissent des surfaces de contact (15, 16, 17, 18) pour entrer en contact avec l'autre du tube interne ou du tube externe respectivement, où la surface de contact de l'un des anneaux est de forme cylindrique et la surface de contact de l'un des anneaux est de forme conique, où la surface de contact de forme cylindrique assure l'alignement de la liaison.

2. Construction d'assemblage selon la revendication 1, où l'anneau à surface de contact de forme cylindrique (15, 16) est positionné en dessous de l'anneau à surface de contact de forme conique (17, 18).

3. Construction d'assemblage selon la revendication 1 ou 2, où le tube interne (13) et/ou le tube externe (14) est de forme conique.

4. Construction d'assemblage selon l'une quelconque des revendications précédentes, où les surfaces de contact (15, 16, 17, 18) d'au moins l'un des anneaux sont configurées pour fournir un contact acier sur acier.

5. Construction d'assemblage selon l'une quelconque des revendications précédentes, où l'un des anneaux (15, 16, 17, 18) est réalisé en un matériau élastiquement déformable résilient.

6. Construction d'assemblage selon l'une quelconque des revendications précédentes, où les anneaux sont fournis sous la forme d'une plaque en forme d'anneau reliée au tube interne (13) et/ou au tube externe (14).

7. Procédé pour fabriquer une extrémité inférieure et/ou une extrémité supérieure d'une superstructure et/ou d'un pieu respectivement à utiliser dans une liaison en alignement entre l'extrémité inférieure et l'extrémité supérieure, le procédé comprenant: la fabrication d'au moins un anneau à partir d'un matériau en plaque; la fixation de l'anneau à l'extrémité inférieure et/ou l'extrémité supérieure, où deux anneaux (15, 16, 17, 18) sont prévus sur l'extrémité inférieure et/ou l'extrémité supérieure à une distance axiale l'un de l'autre, où une surface de contact de l'un des anneaux est de forme cylindrique et une surface de contact de l'autre des anneaux est de forme conique.

8. Procédé selon la revendication 7, où le au moins un anneau comprend une surface de contact usinée pour entrer en contact avec une surface de contact sur l'extrémité inférieure ou l'extrémité supérieure engagée.

9. Procédé selon l'une quelconque des revendications 7 - 8, où le matériau en plaque d'un anneau est un matériau en plaque d'acier, et où le matériau en plaque de l'autre des anneaux est en un matériau élastiquement déformable.

10. Procédé pour installer une éolienne comprenant:
- l'installation d'une substructure, telle qu'un pieu, s'ancrant dans le fond marin, où la substructure est pourvue d'une extrémité supérieure,
- la fourniture d'une superstructure, telle qu'une éolienne ou une pièce de transition, où la superstructure est pourvue d'une extrémité inférieure;
- l'engagement de l'extrémité supérieure de la superstructure avec l'extrémité inférieure de la substructure de manière à former un tube interne (13) et un tube externe (14) s'emboîtant l'un dans l'autre, où le tube interne (13) et/ou le tube externe (14) sont pourvus de deux anneaux positionnés à une distance axiale l'un de l'autre où les anneaux fournissent des surfaces de contact (15, 16, 17, 18) pour entrer en contact avec l'autre du tube interne (13) et du tube externe (14) respectivement, où la surface de contact de l'un des anneaux est de forme cylindrique et la surface de contact de l'un des anneaux est de forme conique, où la surface de contact de forme cylindrique s'engage et établit un contact avec l'autre tube, tout en permettant un mouvement axial.
